# EUROPÄISCHE PATENTANMELDUNG

(11) **EP 0 681 941 A1**
(43) Veröffentlichungstag der Anmeldung: **15.11.1995**
(21) Anmeldenummer: 95101000.8
(22) Anmeldetag: 25.01.1995
(51) Int. Cl.: B60P 1/00

(54) **Laderampe**

(30) Priorität: 13.05.1994 DE 9407993 U
(71) Anmelder: EDELHOFF POLYTECHNIK GMBH & CO., D-58640 Iserlohn (DE)
(72) Erfinder: Schmidt, Knuth, D-58640 Iserlohn (DE)
(74) Vertreter: Laufhütte, Dieter, Dr.-Ing.

(57) **Zusammenfassung**

Die Erfindung betrifft eine Laderampe für ein Fahrzeug, insbesondere für einen Transporter. Erfindungsgemäß ist eine Seitenwandschwenktür (12) zusätzlich um ihre zur Fahrzeugunterseite weisende Kante schwenkbar gelagert, so daß sie nach Lösen ihrer an der entgegengesetzten Seite angeordneten Schwenkführungen als Klapprampe aufschwenkbar ist.

## Beschreibung

Die Erfindung betrifft eine Laderampe für ein Fahrzeuge.

Es ist bereits bekannt, daß bei Transportfahrzeugen Laderampen zum Be- und Entladen von schweren Gütern vorgesehen werden, da es häufig unmöglich ist, schwere Güter auf die Transportebene ohne weiteres Hilfsmittel zu heben und da entsprechende Hilfsfahrzeuge, wie Gabelstapler und dergleichen, auch nicht immer zur Verfügung stehen. Daher weisen beispielsweise LKWs oder LKW-Anhänger hydraulisch abklappbare Heckklappen auf, die um die Endkante der Fahrzeugtransportebene schwenkbar angelenkt sind. Diese Klappen verschließen in der Regel in ihrer Schließstellung die gesamte Heckseite des LKWs, während sie in Fahrzeuglängsrichtung abgeklappt eine schräge Ebene und damit eine Laderampe ergeben. Diese hydraulisch verfahrbaren Heckklappen bedingen eine Sonderkonstruktion und sind verhältnismäßig aufwendig.

Aufgabe der Erfindung ist es, eine Laderampe für Fahrzeuge an die Hand zu geben, die einfach aufgebaut ist und die problemlos bei bestehenden Fahrzeugen, insbesondere Transportern, nachrüstbar ist.

Gemäß einer ersten Lösung dieser Aufgabe wird eine Laderampe für Fahrzeuge geschaffen, bei der eine bereits vorhandene Seitenwandschwenktür zusätzlich um ihre zur Fahrzeugunterseite weisende Kante schwenkbar gelagert wird, so daß sie nach Lösen ihrer an der entgegengesetzten Seite angeordneten Schwenkführungen als Klapprampe aufschwenkbar ist.

Das Lösen der Schwenkführungen kann von Hand erfolgen. Vorteilhaft ist es aber, wenn die Seitenwandschwenktür einen Schließmechanismus mit einem Türgriff aufweist, der verschiedene Schließstellungen alternativ für das vollständige Verschließen der Tür, das seitliche Aufschwenken der Tür und das Abklappen der Tür aufweist.

Diese erfindungsgemäße Laderampe weist den Vorteil auf, daß sie mit nur wenigen zusätzlich anzubringenden Teilen einfach und kostengünstig nachrüstbar ist.

Eine alternative Lösung der zuvor gestellten Aufgabe, für die gesondert Schutz beansprucht wird, besteht aus einer Laderampe für ein Fahrzeug, beispielsweise einen Transporter, aber auch für einen LKW oder LKW-Anhänger, die aus einer um das heckseitige Ende einer Fahrzeugtransportebene schwenkbaren Klappe besteht, wobei diese von einer angeklappten Stellung um ca. 90° in die Fahrzeugtransportebene schwenkbar ist. Die Klappe ist über die Fahrzeugbreite geteilt. Der eine Teil der Klappe ist am Fahrzeugheck angelenkt, während der andere Teil der Klappe nicht am Fahrzeugheck, sondern nur an dem am Fahrzeugheck angelenkten Teil entlang der Teilungsebene schwenkbar angelenkt ist. Der an dem am Fahrzeugheck angelenkten Teil seitlich angelenkte Klappenteil ist über ein ausziehbares oder aufklappbares Teil verlängerbar. Damit dient ein Teil der Klappe als schiefe Transportebene, die seitlich ausgeklappt wird, während der andere Teil der Klappe eine Standfläche bildet.

Gemäß einer Ausführungsform der Erfindung kann der heckseitig angelenkte Teil sich über ca. 1/3 der Fahrzeugbreite erstrecken.

Besonders vorteilhaft läßt sich diese Heckklappe bei einem Transporter mit Schwenktüren, d.h. Heckflügeltüren, nachrüsten, in dem die entsprechende Klappe hinter den Schwenktüren am Fahrzeugchassis schwenkbar angeordnet wird.

Weitere Einzelheiten und Vorteile der Erfindung werden anhand der in der Zeichnung dargestellten Ausführungsbeispiele näher erläutert. Es zeigen:
- Fig. 1:: eine teilweise geschnittene Draufsicht auf einen Transporter mit ausgeklappter Laderampe,
- Fig. 2:: eine Rückansicht des Transporters gemäß Fig. 1 mit ausgeklappter Laderampe,
- Fig. 3:: eine Rückansicht eines Transporters gemäß einer zweiten Ausführungsform nach der zweiten erfindungsgemäßen Lösung,
- Fig. 4:: eine teilweise geschnittene Draufsicht auf einen Transporter in der Ausführungsform gemäß Fig. 3 und
- Fig. 5:: eine Seitenansicht eines Transporters mit ausgeklappter Laderampe gemäß der Ausführungsform nach den Fig. 3 und 4.

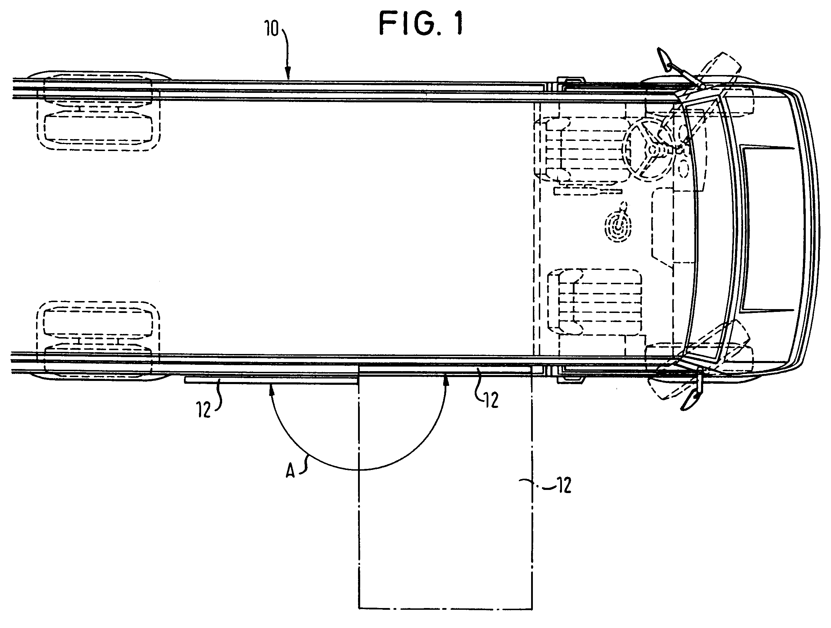

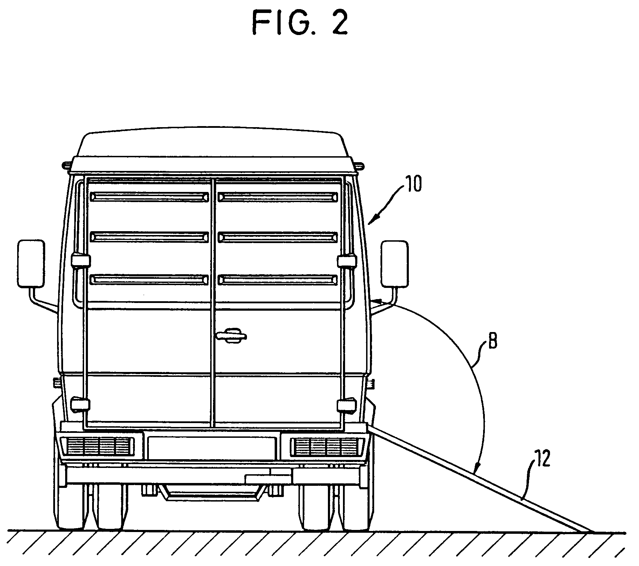

In den Fig. 1 und 2 ist ein handelsüblicher Transporter 10 mit einer Seitenwandschwenktür entsprechend der ersten erfindungsgemäßen Lösung umgebaut worden. In Fig. 1 ist die Seitenwandschwenktür 12 mit durchgezogenen Linien sowohl in geschlossener wie auch in seitlich verschwenkter Stellung dargestellt. Der gestrichelte Doppelpfeil A gibt die Schwenkbewegung an. In strichpunktierter Darstellung ist die Seitenwandschwenktür in abgeklappter Stellung dargestellt. In dieser Stellung dient sie als Laderampe. In Fig. 2 ist die Seitenwandschwenktür als aufgeschwenkte Laderampe gezeigt. Die entsprechende Aufschwenkrichtung ist durch den Doppelpfeil B dargestellt. Gemäß einer hier nicht näher dargestellten einfachen Ausführungsform kann das untere Ende der Schwenktür mit entsprechenden Greifklauen bzw. Rohrmuffenteilen versehen sein, die auf einer entsprechend chassisfesten Stange verschieblich laufen, so daß die Seitenwandschwenktür einerseits seitlich aufgeschwenkt werden kann und andererseits um diese entsprechende hier nicht näher dargestellte Stange aufschwenkbar ist.

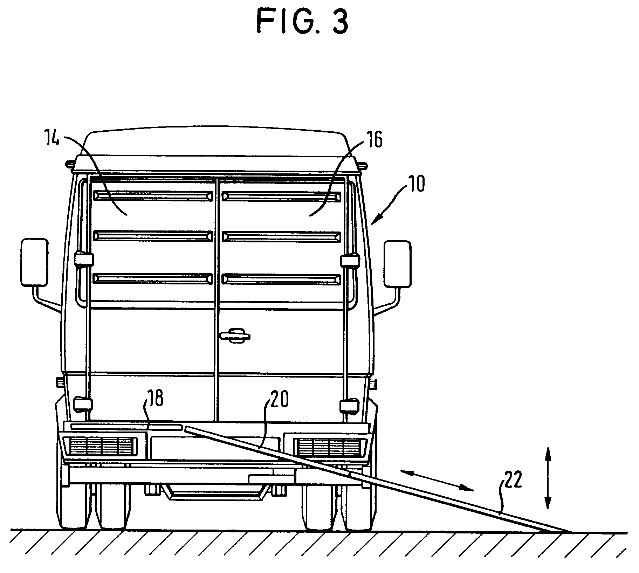

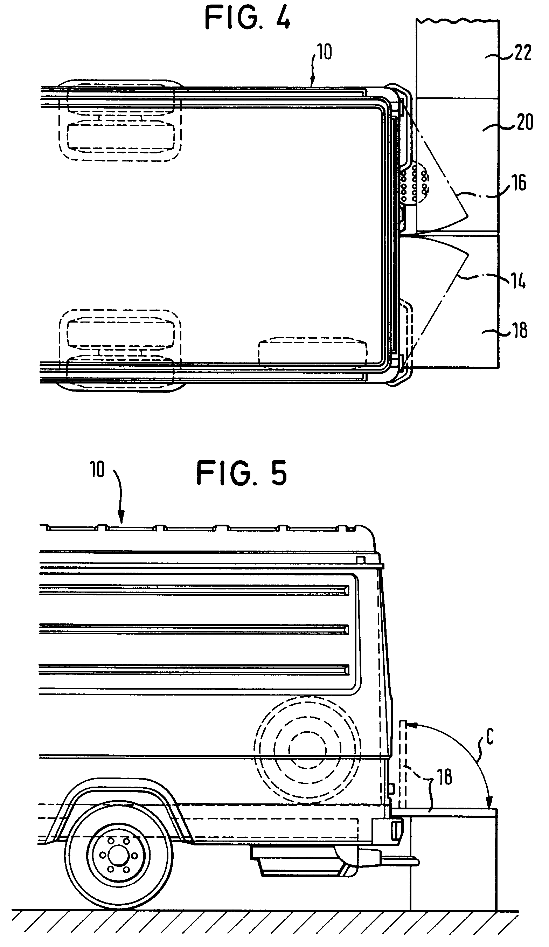

In den Fig. 3-5 ist eine andere erfindungsgemäße Lösung anhand eines Ausführungsbeispiels näher erläutert. In Fig. 3 ist ein handelsüblicher Transporter 10 mit mittig geteilten Hecktüren 14 und 16 dargestellt. Der Transporter weist heckseitig eine zweigeteilte Klappe 18, 20 auf (vgl. Fig. 3 und Fig. 4). Die gesamte Klappe 18, 20 ist von einer angeklappten Stellung (vgl. gestrichelte Darstellung in Fig. 5) in Doppelpfeilrichtung C gemäß Fig. 5 um ca. 90° in eine Stellung verschwenkbar, in der sie mit der Fahrzeugtransportebene fluchtet. Von der Klappe 18, 20 ist nur der Klappenteil 18 schwenkbar um das Fahrzeugheck des Fahrzeuges 10 gelagert. Das Klappenteil 20 ist wiederum schwenkbar entlang der Klappenteilungsebene gelagert. Nach Entriegeln eines hier nicht dargestellten Riegelmechanismusses kann nach Abklappen des Klappenteils 18 in die in Fig. 5 dargestellte aufgeklappte Stellung das Klappenteil 20 nach unten verschwenkt werden, wie dies in der Fig. 3 dargestellt ist. Das Klappenteil 20 kann durch einen austeleskopierbaren Rampenteil 22 seitlich verlängert werden. Somit bilden die Teile 20 und 22 eine seitlich herabgeschwenkte Auffahrrampe, über die auch verhältnismäßig schwere Lasten, beispielsweise mittels eines Schubkarrens, auf die Plattform 18 transportiert werden können.

In Fig. 4 ist dargestellt, wie die Schwenktüren 14 und 16 über die Fahrzeugrampe 18 und 20 hinwegschwenkbar sind. Die Laderampe gemäß dieser Ausführungsform ist einfach nachrüstbar.

## Patentansprüche

1. Laderampe für ein Fahrzeug, insbesondere für einen Transporter,
**dadurch gekennzeichnet**,
daß eine Seitenwandschwenktür zusätzlich um ihre zur Fahrzeugunterseite weisende Kante schwenkbar gelagert ist, so daß sie nach Lösen Ihrer an der entgegengesetzten Seite angeordneten Schwenkführungen als Klapprampe aufschwenkbar ist.

2. Laderampe nach Anspruch 1, dadurch gekennzeichnet, daß die Seitenwandschwenktür einen Schließmechanismus mit einem Türgriff aufweist, der verschiedene Schließstellungen alternativ für das vollständige Verschließen der Tür, das seitliche Aufschwenken der Tür und das Abklappen der Tür aufweist.

3. Laderampe für ein Fahrzeug, z.B. für einen Transporter, einen LKW oder LKW-Anhänger,
dadurch gekennzeichnet,
daß sie auf einer um das heckseitige Ende einer Fahrzeugtransportebene schwenkbaren Klappe besteht, die von einer angeklappten Stellung um ca. 90° in die Fahrzeugtransportebene schwenkbar ist, daß die Klappe über die Fahrzeugbreite geteilt ist, daß der eine Teil der Klappe am Fahrzeugheck angelenkt ist, während der andere Teil der Klappe nur mit dem am Fahrzeugheck angelenkten Teil entlang der Teilungsebene schwenkbar angelenkt ist, und daß der an dem fahrzeugheckseitig angelenkten Klappenteil angelenkte Klappenteil über ein ausziehbares oder ausklappbares Teil verlängerbar ist.

4. Laderampe nach Anspruch 3, dadurch gekennzeichnet, daß der heckseitig angelenkte Teil sich über ca. 1/3 der Fahrzeugbreite erstreckt.

5. Laderampe nach Anspruch 3 oder Anspruch 4, dadurch gekennzeichnet, daß das Fahrzeugheck über Schwenktüren verschließbar ist und daß die Klappe hinter den Schwenktüren am Fahrzeugchassis angelenkt ist.
